Europäisches Patentamt

European Patent Office

Office européen des brevets

(11) Publication number: **0 109 799**
**B1**

(12) **EUROPEAN PATENT SPECIFICATION**

(45) Date of publication of patent specification: 22.04.87

(51) Int. Cl.⁴: **B 32 B 31/12,** B 29 D 9/00

(21) Application number: **83306825.7**

(22) Date of filing: **09.11.83**

(54) Control stretch laminating device.

(30) Priority: **12.11.82 US 441276**

(43) Date of publication of application:
**30.05.84 Bulletin 84/22**

(45) Publication of the grant of the patent:
**22.04.87 Bulletin 87/17**

(84) Designated Contracting States:
**AT BE CH DE FR IT LI LU SE**

(56) References cited:
**DE-A-2 420 355**
**GB-A-1 220 080**

(73) Proprietor: **ADOLPH COORS COMPANY**
**17755 West 32nd Avenue**
**Golden Colorado 80401 (US)**

(72) Inventor: **Haake, Joseph Robert**
**10951 W. 107th Place**
**Broomfield Colorado 80020 (US)**
Inventor: **Fowler, Tracy Jay**
**1195 South Harrison**
**Denver Colorado 80210 (US)**
Inventor: **Jensen, James Wendell**
**Kelly Road West Sugarloaf Star Route**
**Boulder Colorado 80302 (US)**

(74) Representative: **Sommerville, John Henry et al**
**SOMMERVILLE & RUSHTON 11 Holywell Hill**
**St. Albans Hertfordshire, AL1 1EZ (GB)**

Courier Press, Leamington Spa, England.

## Description

The present invention relates generally to the production of laminated paper products and more particularly to a device for laminating a continuous roll of extensible plastic film material to a continuous roll of paper backing material wherein the device has a system for controlling the amount of stretch in the plastic film material to ensure proper registry of the film material with the paper material.

More particularly, the present invention relates to an apparatus for laminating plastic film material to a paper material to form a laminated composite, the film material passing through the apparatus in a continuous longitudinally extending web and being extensibly deformable such that the longitudinal distance between any two reference points on the film web may vary during lamination; the apparatus being of the type having support means for supporting various components of the apparatus; paper supply means operably mounted on said support means for providing a continuous supply of paper to be laminated;

film supply means operably mounted on said support means for providing a continuous supply of film to be laminated;

laminating means operably mounted on said support means for bondingly compressing said film web to said paper to form a laminated composite continuous with said film web; and in which

a first set of rolls is operably mounted on said support means and engages said film web at a position downstream of said film supply means;

a second set of rolls is operably mounted on said support means and engages said film web at a position downstream of said first set of rolls;

roll speed varying means are provided for varying the speed of said first set of rolls with respect to the speed of said second set of rolls for selectively stretching or relaxing the portion of said film web positioned therebetween.

Such an apparatus is described, e.g. in GB—A—1220080.

Lamination of a plastic film material to a paper material has been found to be particularly advantageous where paper products having high strength and abrasion resistant qualities are required. Such laminated composites are particularly desirable in the packaging industry, where artwork may be printed on the interior side of the plastic film to produce a high quality display package. The construction and use of such laminated composites are described in Peer, U.S. Patent No. 4,254,173.

In producing a laminated composite of the type described in Peer, both the plastic film material and the paper material may be provided in continuous sheets from spools. The paper and the plastic film generally pass over a number of roller type devices where each of the materials are independently stretched out under tension and treated as necessary depending upon the particular end use for the laminated composite. For example the plastic material may be irradiated in conventional processes to increase its strength or improve its printability. In preferred embodiments the plastic is printed with various graphics and provided with a metalized background over the graphics to enhance the package appearance. The paper may undergo treatment as well such as being electrostatically charged to aid in the bonding process. Either the film material or the paper material or both are treated thereafter with suitable adhesive to provide a bond between the paper and film. To complete the laminating process, the paper and film material are pressed together between opposed rollers to produce a smooth flat composite. Various heating or cooling processes may also be required to ensure proper adhesion of the surfaces, depending on the type of the film, paper and adhesive agent which are being used in the process. The end product of the process is a laminated composite which may be fed directly to cutting dies or other machines for further processing. The composite may also be taken up directly on a separate spool for storage and later processing.

Use of the film/paper composite provides many advantages over conventional packaging material but also creates some unique problems. In order to be cost effective, the plastic material used is generally quite thin; on the order of 0.25—2.0 mils $(1\ ml=2.54\times10^{-5}n)$. Plastic films of such thicknesses tend to stretch or shrink during the lamination process as a result of variations in temperature and the different inertial forces exerted on the film as it is unrolled and processed prior to bonding with the paper. Such stretching and shrinking may cause warping or buckling in the laminated composite as the film returns to a steady state condition. Similarly, a printed image may be repeated on the film for later lamination, in registry with predetermined lengths of paper material. In such cases the printed image length must be held within close tolerances in order to permit proper registry with other processing activities such as automated cutting in a later process step.

Thus it can be seen that a need exists for a paper/film laminating device which is capable of controlling in a more effective manner the amount of stretch in the plastic film material prior to lamination.

Such a problem is solved by an apparatus as described above, characterised by

(a) film length monitoring means for measuring the length of predetermined portions of said moving film web at a position downstream said second set of rolls and for providing a monitor signal indicative of said measured length to a data processing means; and

(b) data processing means for comparing the measured length value of said monitor signal to a predetermined length value and providing command signals responsive thereto to said roll speed varying means for adjusting the speed of said first set of rolls relative the speed of said second set of rolls for imparting a predetermined amount of stretch or relaxation to said film web.

The present invention will now be described, by way of example, with reference to the accompanying drawings, in which:

Fig. 1 is a schematic side elevation view showing the operation of a laminating device;

Fig. 2 is a schematic drawing showing the monitoring and control functions of the laminating device of the type shown in Fig. 1;

Fig. 3 is a schematic plan view showing the major elements of the drive train of a laminating device of the type shown in Fig. 1;

Fig. 4 is a perspective view of a laminating device of the type shown in Fig. 1; and

Fig. 5 illustrates schematically the electronic control system of the laminating device.

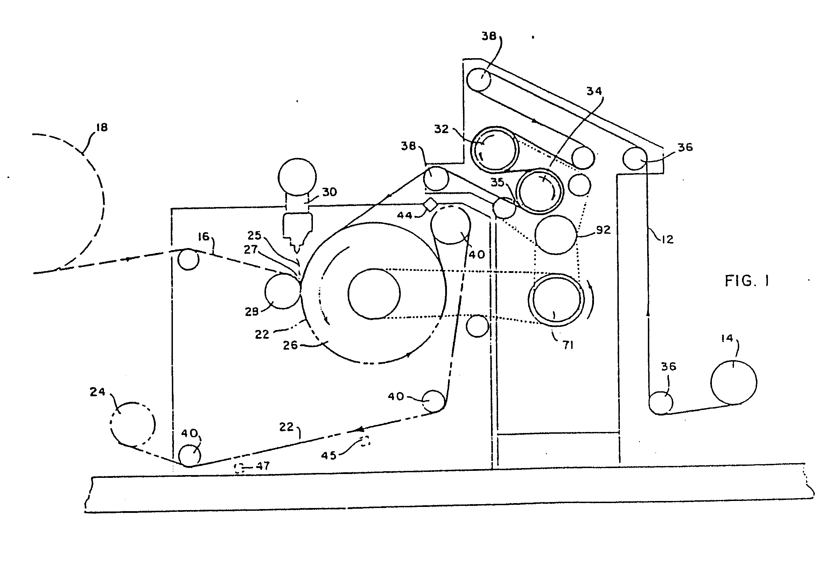

As illustrated schematically by Fig. 1, the laminating device of the present invention comprises a film supply means such as film spool 14 for supplying extensible plastic film material 12 to be laminated with paper material 16 provided from a paper supply means such as a paper spool 18. A composite collection means such as a composite take up spool 24 is provided for collecting the composite film/paper material after lamination. The film 12 upon leaving the film spool 14 may pass over one or more cylindrical idler rolls 36 which may be used to straighten and flatten the film 12 as it leaves the spool 14 and which also function to properly align the film material 12 with a first motive means such a set of rolls (S-wrap rolls) 32, 34. The motive means provides the motive force for drawing the film 12 from the film supply means and also cooperates with a second motive means in controlling the stretch in the film material, as described in further detail below. In the embodiment illustrated in Figs. 1—4, the first motive means comprise a set of rolls (S-wrap rolls) 32, 34. The two equal radius cylindrical rolls 32, 34 are positioned in parallel axial alignment and rotate in opposite directions at the same speed. The surface of the rolls 32, 34 must be sufficiently smooth to avoid damaging the plastic film 12 and yet must provide sufficient frictional contact with the film 12 to prevent slipping between the film and roll surfaces. The film web is wrapped in an S-shaped configuration over and around the upstream roll 32, then over and around the downstream roll 34, as illustrated in Fig. 1. This so called "S-wrap" configuration enhances the frictional contact between the film 12 and rolls 32, 34 providing a nonslipping "nip effect" relationship wherein the rate of film advance upon leaving the rolls 32, 34 is equal to the tangential speed component at the surface of the rolls 32, 34. After leaving the first motive means the film 12 passes into a second motive means which in the preferred embodiment also functions as a laminating means. The second motive means comprises a laminating nip 27 formed by a second set rolls 26, 28.

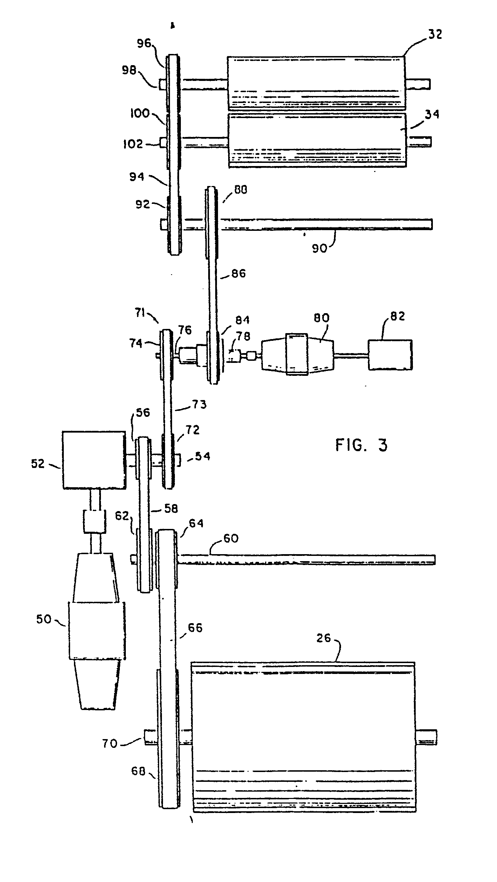

In the preferred embodiment one or more idler rolls 38 may be used to position the film 12 at a proper entry angle into the laminating nip 27. The film 12 and paper 16 are treated with an adhesive material such as for example a melted polymer plastic 25 supplied by an adhesive supply source 30 which causes permanent bonding of the paper 16 and plastic 12 as it passes through the laminating nip 27. The laminating rolls 26, 28 may comprise a main roll 26 containing cooling (or heating) elements to aid in the production of the adhesive bond between the paper and film. The main roll 26 is driven by a main drive means such as main drive motor 50 illustrated in Fig. 3 and discussed in further detail below. Compression roll 28 may also be driven by the same drive motor 50 or may alternatively be driven by rolling contact with the main roll 26.

The laminating nip 27 formed by laminating rolls 26, 28 draws the film 12 and paper 16 therethrough and simultaneously compresses it to form laminated composite 22.

Again it should be noted that nonslipping contact between the moving surface of the second motive means and the film 12 is essential to the operation of the invention. In the preferred embodiment this nonslipping contact is ensured by the relatively large surface area of the main roll 26 over which the film is wrapped as well as the compressive force exerted by the compression roll 28 at the laminating nip 27. As with the S-wrap rolls 32, 34, the surfaces of the compression roll 28 and main roll 26 must be sufficiently smooth to avoid damaging the film 12 and paper 16 and may comprise polished steel.

Nonslipping frictional contact between the main roll 26 and film ensures that the rate of film advance through the laminating nip will be equal to the tangential velocity component of the surface of the main roll 26. Thus the rate of film advance at the point the film leaves the S-wrap rolls 32, 34 and the rate of film advance at the laminating nip 27 is directly proportional to the rotational velocity of the S-wrap rolls 32, 34 and the rotational velocity of the main roll 26 respectively. By changing the rotational velocity of the S-wrap rolls 32, 34 with respect to the rotational velocity of the main roll 26, a speed differential is created in the film web between the point 35 where the film leaves the S-wrap rolls 32, 34 and the point that it enters the laminating nip 27. By increasing the rotational speed of the S-wrap rolls 32, 34 with respect to the main roll 26 so that the tangential velocity component at the surface of the S-wrap rolls 32, 34 exceeds the tangential velocity component at the surface of the main roll 26, the film web therebetween is caused to relax. By decreasing the relative speed of the S-wrap rolls 32, 34 with respect to the main roll 26 the film is caused to stretch. The amount of stretch or relaxation in the film is dependent on the amount of difference between the surface speeds of the S-wrap rolls 32, 34 and main roll 26. Upon leaving the laminating nip 27, composite 22 may pass over another series of idler rolls 40 and is thereafter received by a collection means such as composite take up spool 24. Alternatively it may be further processed as by cutting and folding devices (not shown) to form a final or more complete product.

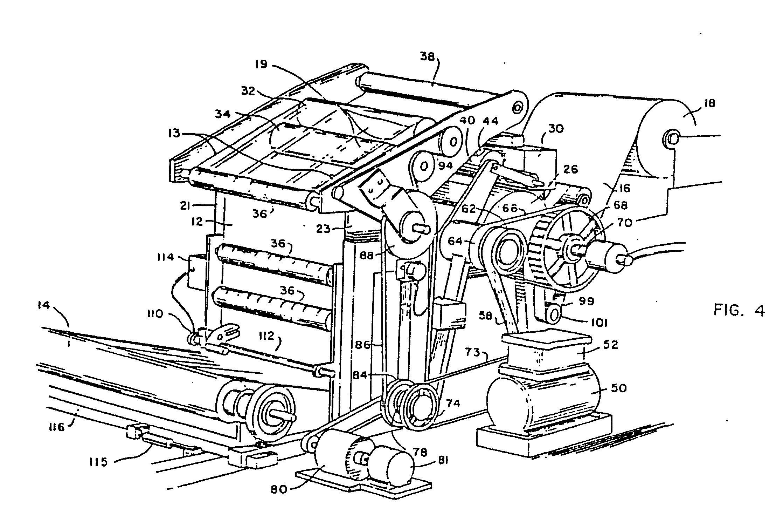

The relative stretch in the film 12 subsequent to lamination with the paper 16 is measured by monitoring means. In the preferred embodiment the film 12 is provided with photoelectric readable preprinted marks 19 positioned at equally spaced points near one edge of the film 12 as shown by Fig. 4. The distance between these marks 19 will be referred to hereinafter as the "repeat length". As previously mentioned, the laminating device is designed to stretch or relax the film 12 in order to laminate a predetermined portion of the film 12 to the paper backing material 16. The distance between the marks in this ideal or design condition will be referred to as the "design repeat length". However, during operation of the laminating device 10, the film 12 will stretch and relax and thus the distance between the marks may deviate from the design repeat length until the system corrects itself, as discussed hereinafter. The actual distance measured between marks 19 by the monitoring means, described hereinafter, will be referred to as the "actual repeat length".

The monitoring means provides data to a data processing means from which the amount of stretch or relaxation in the film may be computed. The data processing means provides a control signal to a first motive means speed control means responsive to the monitoring means data to selectively vary the speed of the first motive means with respect to the second motive means for imparting a predetermined amount of stretch or relaxation to the film as it passes between the first and second motive means.

In the illustrative embodiments the monitoring means comprise photoelectric sensing means such as photoelectric unit 44 positioned at some point near the path of the composite web 22 downstream from laminating nip 27 for detecting the preprinted spaced apart marks 19 on the film 12 edge. The photoelectric unit operates in a conventional manner by sending out an electronic pulse signal in response to disturbance in beam of light (not shown) provided by the unit. In this use of the photoelectric unit with the present invention, the disturbance in the light beam is produced by the passage therethrough of a preprinted mark 19. The photoelectric unit 44 might be any of the a number of commercially available high speed units such as MEI Services Inc.'s Scan-A-Matic Model PLM-2000.

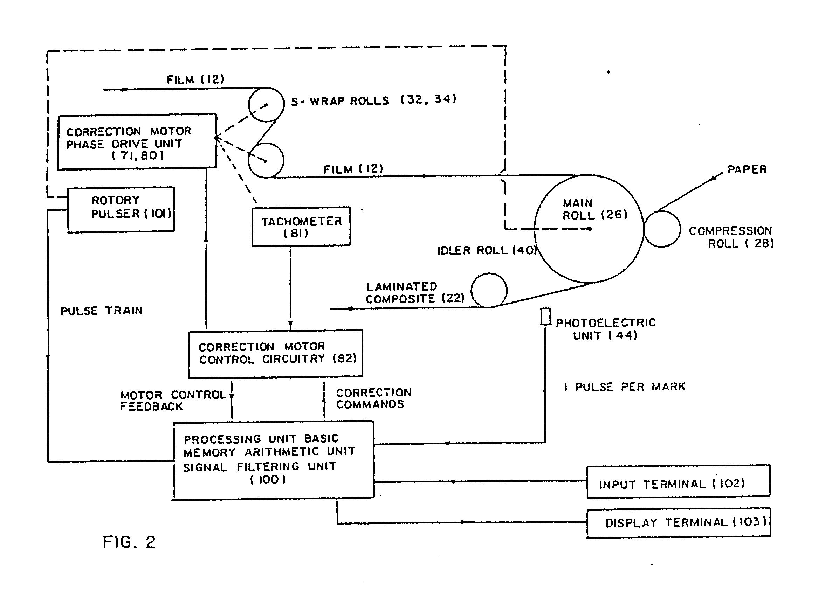

In the preferred embodiment as illustrated schematically by Fig. 2 the photoelectric unit 44 provides a single electronic pulse signal to the data processing means which may be an electron data processing unit 100, each time a printed mark is detected. As further illustrated by Fig. 3, a continuous electronic pulse train is also provided as input to the data processing unit 100 by a rotary pulser unit 101. The rotary pulser is rotatably connected, as by a drive belt 99 (Fig. 4) or other conventional means, to one of the drive shafts in the main roll 26 drive system, described in further detail hereinafter. The rotary pulser 101 emits a fixed number of pulses per revolution of the drive system component typically on the order of 3,000—6,000. Thus the pulse train receives its master speed reference from the main roll drive system providing a time base for computer operations described below. The rotary pulser may be of a commercially available type such as the Baldwin 5V278 Optical Incremental Encoder.

The data processing unit 100 is programmed by a convention circuitry well known in the art to count the number of pulses input from the rotary pulser 101 between consecutive pulses detected by photoelectric unit 44. In slightly different language, the signal from the photoelectric unit initializes a "count window" which is loaded with digital data. The data is loaded into memory at the detection of the next mark and a new count window is simultaneously. initialized for the next data loading.

The digital data from each count window is processed to determine the actual repeat length of the film passing the photoelectric unit 44 and the result is compared by means of conventional comparator circuitry well known in the art to a value representing the design repeat length which is stored in memory. Electronic correction commands are generated based on the deviation between the actual and design repeat lengths and provided as input to correction motor control circuitry 80.

Operator input from a conventional input terminal 102 of a type well known in the art provides processing information such as the design repeat length and the amount of deviation of the actual repeat length from the design repeat length required to initiate correction commands as well as the number of count window repeats required to initiate correction commands.

The electronic correction commands provided to the control circuitry 82 are converted thereby to analog output which is supplied to the direct current correction motor 80 mechanically linked to a phase drive unit 71. A conventional motor speed monitoring means such as a tachometer generator 81 is operably connected to the correction motor drive shaft and outputs a tach signal which is provided to the correction motor control circuitry 82.

The mechanical output of the phase drive unit 71 is drivingly linked to the S-wrap rolls 32, 34 discussed in further detail hereinafter and the rotational speed of the rolls 32, 34 is thus controlled with respect to the main roll 26 rotational speed by mechanical input from the correction motor 80.

Thus by calculating the actual repeat length of the laminated composite 22 with information supplied by the rotary pulser 101 and photoelectric unit 44 and comparing the result to the design repeat length, the processing unit 100 controls the speed of the S-wrap rolls 32, 34 through appropriate control circuitry and a phase drive system to control the stretch or relaxation of the film 12.

As indicated by phantom lines in Fig. 1, the method of monitoring the film repeat length may be varied slightly by using two photoelectric assemblies or units 45, 47 positioned at a spaced apart distance equal to the design repeat length of the film. In this embodiment a count window is initialized by a mark detection pulse from one photoelectric detector and terminated by a mark detection pulse from the other photoelectric detector. If the actual repeat length is equal to the design repeat length consecutive spaced apart preprinted marks 19 pass the photoelectric units 45, 47 simultaneously leaving no time gap between the pulse signals generated thereby. Thus no pulse train digital data enters the count window. However, any deviation of the actual repeat length from the design repeat length will cause the marks 19 to pass the photoelectric units 45, 47 at different times producing a time differential between the pulse signals produced by the photoelectric units 45, 47. The time differential between signals allows pulse train data to be loaded into the count window, the number of pulse train pulses in the window indicating the amount of error in length. Thus in this embodiment no operator input to the processor 100 is required to indicate the design repeat length but the photoelectric devices 45 and 47 must be physically positioned at a distance equal to the design repeat length or some multiple thereof.

The processing unit 100 may also be provided with a display 103 for displaying various information such as actual repeat length, repeat length error, time response data, etc. depending upon the programming software used.

The mechanical linkage of the laminating device is illustrated in Fig. 3. A main drive means such as main drive motor 50 is operably connected to a main gear box 52 which in turn drives the main drive shaft 54. Main drive shaft pulley 56 mounted on shaft 54 is connected by means of drive belt 58 to a secondary drive shaft pulley 62 coaxially mounted on secondary drive shaft 60 with pulley 64. Pulley 64 is operably connected to main roll pulley 68 by another belt 66 whereby the main roll 26 is rotated about main roll drive shaft 70. S-wrap rolls 32, 34 are mechanically linked to phase drive unit 71 and main drive motor 50 as by main drive shaft parasite pulley 72 operably connected by belt 73 to phase drive pulley 74, in turn mounted on phase drive shaft 76. Phase drive shaft 76 is operably connected by conventional means well known in the art to a differential unit 78, such as for example a Conac 25 Differential Unit, having a phase drive correction pulley 84. Phase drive correction pulley 84 is operably connected by means of a drive belt 86 to conversion pulley 88 mounted on conversion drive shaft 90 upon which S-wrap connector pulley 92 is coaxially mounted. S-wrap roll belt 94 is operably connected to upper S-wrap roll pulley 96 and lower S-wrap roll pulley 100 in an S-wrap configuration (Fig. 4) whereby first and second S-wrap shafts 98, 102 and consequently S-wrap rolls 32, 34 are rotated in opposite directions at the same speed.

Mechanical input to differential unit 78 is provided by correction motor 80 for the purpose of increasing or decreasing the rotation speed of phase drive correction pulley 84. The correction motor rotational input is added or subtracted from the speed of shaft 76 by an internal differential gearing mechanism (not shown) of a type well known in the mechanical arts. Correction motor 80 is actuated and controlled by correction motor control circuitry unit 82 which in turn receives commands from processing unit 100 as discussed in further detail herein.

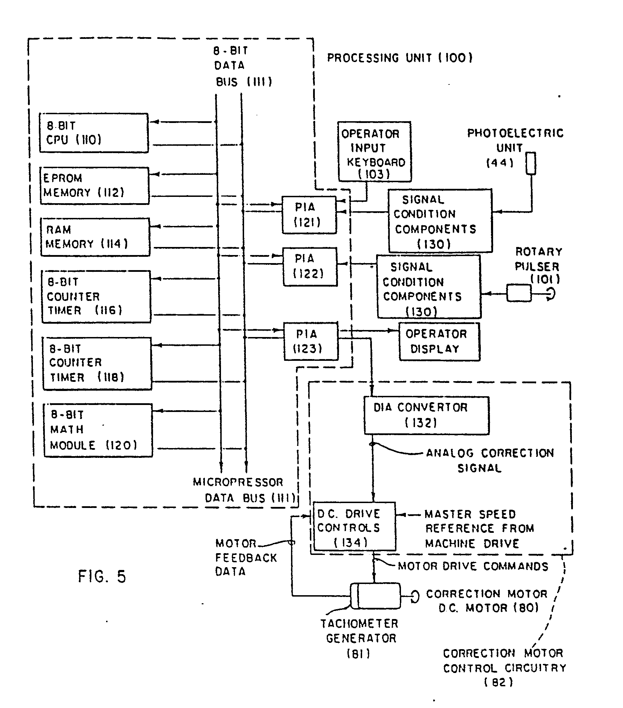

The electronic components of the systems will now be described in further detail with reference to Fig. 5.

In the presently preferred embodiment, the electronic data processing unit 100 can be any industrial rated 8-bit microprocessor hereinafter CPU (Central Processing Unit), compatible RAM (Random Access Memory) and EPROM (Electrically Programmable Read Only Memory) memory devices, and required interface and signal conditioning components. In the presently preferred embodiment of the invention, the Intel Corporation 8085 CPU and associated memory devices were chosen, which may include an Intel SBC 094 RAM unit, and an Itel 2732 EPROM unit.

As illustrated by Fig. 5, the CPU 110, EPROM memory 112, RAM memory 114, and a conventional 8-bit counter timers 116, 118 and 8-bit math module 120 are connected to a conventional system bus 111 such as an Intel Bus comparable with an Intel Corporation 8085 CPU. The counter timers 116, 118 may comprise conventional units such as 8254 and the math module 120 may be an Intel M8231.

Prior to controlled processing of the extensible film 12 in the laminating device 10, the operator must determine manually the correct repeat length in inches, and the allowable error. This data is easily determined by physical measurement or previous run experience. The repeat data is entered through the operator input terminal keyboard 102 which is arranged in the form of a standard typewriter keyboard with output ports for microprocessor interface. The keyboard is wired so that depression of a button completes the circuit and the associated data bit is connected to PIA (Periferal Interface Adapter) 121. The PIA 121 may be an Intel 8212 chip having two 8-bit Input/Output ports for interface to peripheral devices. One part of PIA 121 is dedicated to keyboard 102 input while the other part is dedicated to conditioned data input from the mark scanning photoelectric unit 44. The photoelectric unit 44 provides an input pulse for each repeat length mark that passes through its radiated beam, as explained above.

Program software stored in EPROM memory 112 transforms the previously entered repeat length and error into digital counts directly related to digital data received from external rotary pulser 101.

The rotary pulser 101 provides variable numbers of digital count pulses and pulse widths dependent on rotary pulser shaft press and internal construction. The digital count pulses are filtered and conditioned to eliminate false signals and provide constant levels by conventional signal conditioning components 130 of a type well known in the art. The conditioned digital count pulses are wired directly to PIA 122, of similar or identical construction to PIA 121, which is in turn wired to a data bus 111, as illustrated in Fig. 5.

Program software stored in EPROM memory 112, instructs the CPU 110 to orient the counter/ time 116, 118 as an 8-bit counter that will continuously count and record rotary pulser digital inputs. Additional software in EPROM memory 112 also instructs the CPU 110 to retrieve the count data from the counter 116, 118 on the leading edge of the photoeye pulse and reset the counter on the falling edge of the unit 44 pulse. The counter will then proceed with its counting duties while the previous count is transferred to RAM 114 memory for utilization. Previous operator input has specified the number of count updates to be collected and stored prior to calculation of actual repeat length. In lamination of extensible films count updates can range from 1 to 10 with a number less than 5 being desirable.

Once the specified number of count updates has been achieved program software in EPROM instructs the CPU 110 to calculate the average actual repeat and compare this to the desired repeat previously stored in memory.

If the calculated average repeat is within the limits of allowable error, then no correction is required and the system continues its monitoring.

If the calculated average repeat is less than or greater than the allowable error program software in EPROM memory 112 instructs the CPU to output the appropriate error correction signal through PIA 123, of identical construction to PIA 121 and 122, to digital to analog convertor 132 (DIA convertor).

The D/A converter 132 is of conventional construction well-known in the art such as a Burr Brown DAC 74 unit and outputs a 0—8 VDC signal which is directly wired to the input of a summing amplifier circuit (not shown) with proportional rate feed back. This summing amplifier circuit is a standard commercially available circuit board incorporated in a D.C. drive motor controller 134. The motor controller 134 in the preferred embodiment may be a Reliance Electric Company *"Flex-Pak Plus"* with regeneration. The drive controller 134 derives its master speed reference from the machine main drive motor 50 and is geared in the correct ratio to provide a speed match on the surface of the main roll 26 and the S-Wrap correction rolls 32, 34. The correction motor tachometer generator 81 closes the feedback loop to the drive controller 134 and insures proper speed regulation. The analog signal from the D/A convertor 132 is summed with the master speed reference and will produce up to a + or −5% speed variation of the correction motor with respect to the main drive, depending on the analog signal. The speed variation produced by the correction motor 80 with respect to the main roll 26 then produces the stretch control required by the process. The Flex-Pak Plus which may be used as controller 134 and an associated 3/4 H.P.D.C. motor which may be used as correction motor 80 are standard commercially available components. Such devices may be factory modified to accept both an operator manual input adjustment for draw control and the control system input. The operator display terminal 103 may be any standard commercially available CRT with interface ports configured for connection to the Intel Bus. Through program software the system can display on the CRT such parameters as web line speed, repeat length, repeat error, repeat tendency and web tension.

A typical production unit embodying the above described features of the invention having support means such as vertical support blocks 21, 23 wherein the various rolls and other system components are journeled or otherwise operably mounted is illustrated in Fig. 4. Fig. 4 also illustrates additional apparatus for monitoring and controlling the lateral position of the film 12. A photoelectric sensing device 110 of a conventional type is mounted at a predetermined position on transverse rod 112 immediately above the lateral edge of film 12. The photoelectric sensing device 110 sends edge location information to a control box 114 having conventional circuitry for actuating a power means such as hydraulic cylinder 115 to move the film roll 14 laterally, as on sliding base 116 whereby the film edge is maintained in proper position for entry into laminating device 10.

**Claims**

1. An apparatus for laminating plastic film material (12) to a paper material (16) to form a laminated composite, the film material passing through the apparatus in a continuous longitudinally extending web and being extensibly deformable such that the longitudinal distance between any two reference points on the film web may vary during lamination; the apparatus being of the type having support means for supporting various components of the apparatus; paper supply means (18) operably mounted on said support means for providing a continuous supply of paper to be laminated; film supply means (14) operably mounted on said support means for providing a continuous supply of film to be laminated; laminating means (26) operably mounted on said support means for bondingly compressing said film web to said paper to form a laminated composite continuous with said film web; and in which

a first set of rolls (32, 34) is operably mounted on said support means and engages said film web at a position downstream of said film supply means (14);

a second set of rolls (26, 28) is operably mounted on said support means and engages said film web at a position downstream of said first set of rolls;

roll speed varying means (71, 80) are provided for varying the speed of said first set of rolls with respect to the speed of said second set of rolls for selectively stretching or relaxing the portion of said film web positioned therebetween; characterised by

(a) film length monitoring means (44; 45, 47) for measuring the length of predetermined portions of said moving film web at a position downstream said second set of rolls and for providing a monitor signal indicative of said measured length to a data processing means; and

(b) data processing means (100) for comparing the measured length value of said monitor signal to a predetermined length value and providing command signals responsive thereto to said roll speed varying means (71, 80) for adjusting the speed of said first set of rolls relative the speed of said second set of rolls for imparting a predetermined amount of stretch or relaxation to said film web.

2. The apparatus of claim 1 characterized in that said data processing means (100) comprises microprocessor means for processing electronic data.

3. The apparatus of claim 1 characterized in that said laminating means consists of said second set of rolls (26, 28).

4. The apparatus of claim 1 characterized in that said film length monitoring means comprises:

(a) a mark detection means (44; 45, 47) for detecting the passage of a mark (19) and sending an electronic detection pulse to said data processing means (100) in response to said detection, said mark detection means being positioned at a predetermined position downstream from said laminating means; and

(b) a pulse train generating means (rotary pulser, 101) for providing a continuous, high frequency, electronic pulse train to said data processing means (100) the frequency of said pulse train being dependent upon the rate of movement of said laminated composite through said laminating means.

5. The apparatus of claim 4 characterized in that said mark detection means comprises at least one photoelectric means (44; 45, 47) for generating an electric pulse signal in response to a mark (19) passing through a fixed beam of light provided by said photoelectric means.

6. The apparatus of claim 5 characterized in that said photoelectric means comprises a single photoelectric unit (44) wherein said data processing unit computes the distance between the detected marks based on the number of high frequency pulses generated by said pulse train generating means between consecutive detection pulses signals.

7. The apparatus of claim 5 characterized in that said photoelectric means comprises two spaced apart photoelectric units (45, 47) wherein the spacing of said photoelectric units is a predetermined distance;

and wherein said data processing means computes the difference between said predetermined distance between photoelectric units and the distance between detected marks by counting the number of pulses in said continuous pulse train between the detection pulses input by the different photoelectric units whereby error from a predetermined design spacing is calculated.

**Patentansprüche**

1. Vorrichtung zum Laminieren eines Kunststoffilmmateriales (12) auf ein Papiermaterial (16), um einen laminierten Verbundstoff zu bilden, wobei das Folienmaterial die Vorrichtung in einer kontinuierlichen der Länge nach sich erstreckenden Bahn durchläuft, und welches so dehnbar verformbar ist, daß der Längsabstand zwischen irgendwelchen zwei Bezugspunkten auf der Folienbahn während der Laminierung sich verändern kann; die Vorrichtung ist von der Art, welche eine Supporteinrichtung zur Lagerung verschiedener Teile der Vorrichtung aufweist, eine Papierzufuhreinrichtung (18) ist betriebsbereit an der Supporteinrichtung befestigt, um eine kontinuierliche Zuführung des zu laminierenden Papieres bereitzustellen; eine Folienzuführeinrichtung (14) ist an dieser Supporteinrichtung betriebsbereit befestigt, um eine kontinuierliche Zufuhr von zu laminierender Folie bereitzustellen; eine Laminierungseinrichtung (26) ist an der Supporteinrichtung betriebsbereit zum klebenden Pressen der Folienbahn auf das Papier befestigt, um einen laminierten Verbundstoff zu bilden, und wobei

ein erster Satz Walzen (32, 34) an der Supporteinrichtung betriebsbereit befestigt ist und mit der Folienbahn an einer von der Folienzuführeinrichtung (14) stromabwärtigen Position in Eingriff gelangt;

ein zweiter Satz Walzen (26, 28) an der Supporteinrichtung betriebsbereit befestigt ist und mit der Folienbahn an einer von dem ersten Satz Walzen stromabwärtigen Position zusammenarbeitet;

eine Walzengeschwindigkeitsänderungseinrichtung (71, 80) zum Ändern der Geschwindigkeit des ersten Walzensatzes in Bezug auf die Geschwindigkeit des zweiten Walzensatzes zum wahlweisen Dehnen oder Entspannen des dazwischen angeordneten Folienbahnabschnittes vorgesehen ist,

gekennzeichnet durch:

(a) eine Folienlängenüberwachungseinrichtung (44; 45, 47) zum Messen der Länge von vorbestimmten Abschnitten der sich bewegenden Folienbahn an einer von dem zweiten Walzensatz stromabwärtigen Position und zum Bereitstellen eines Überwachungssignales, welches die gemessene Länge einer Datenverarbeitungseinrichtung anzeigt; und

(b) eine Datenverarbeitungseinrichtung (100) zum Vergleichen des gemessenen Längenwertes des Überwachungssignales mit einem Vorgegebenen Längenwert und Bereitstellen von Leitgrössen bezüglich der Walzengeschwindigkeitsänderungseinrichtung (71, 80) zum Einstellen der Geschwindigkeit des ersten Walzensatzes relativ zu der Geschwindigkeit des zweiten Walzensatzes, um der Folienbahn einen vorbestimmten Dehnungs- oder Entspannungsbetrag zu geben.

2. Vorrichtung nach Anspruch 1, dadurch gekennzeichnet, daß die Datenverarbeitungseinrichtung (100) Mikroprozessoren zum Verarbeiten von elektronischen Daten enthält.

3. Vorrichtung nach Anspruch 1, dadurch gekennzeichnet, daß die Laminierungseinrichtung aus dem zweiten Walzensatz (26, 28) besteht.

4. Vorrichtung nach Anspruch 1, dadurch gekennzeichnet, daß die Folienlängenüberwachungseinrichtung folgendes enthält:

a) eine Markierungsermittlungseinrichtung (44; 45, 47) zum Erfassen des Durchlaufes einer Markierung (19) und Senden eines elektronischen Erfassungsimpulses zu der Datenverarbeitungseinrichtung (100) als Antwort auf die Erfassung, wobei die Markierungsermittlungseinrichtung an einer vorgegebenen von der Laminierungseinrichtung stromabwärtigen Position angeordnet ist; und

b) eine Impulsfolgeerzeugungseinrichtung (Drehimpulsgeber 101) zum Bereitstellen einer kontinuierlichen Hochfrequenzelektroimpulsfolge zu der Datenverarbeitungseinrichtung (100), wobei die Frequenz der Impulsfolge von der Bewegungsgeschwindigkeit des laminierten Verbundstoffes durch die Laminierungseinrichtung abhängig ist.

5. Vorrichtung nach Anspruch 4, dadurch gekennzeichnet, daß die Markierungsermittlungseinrichtung mindestens eine photoelektrische Einrichtung (44; 45, 47) zum Erzeugen eines elektrischen Impulssignales als Antwort auf eine Markierung (19) beinhaltet, welche einen feststehenden Lichtstrahl durchläuft, welcher durch die photoelektrische Einrichtung bereitgestellt ist.

6. Vorrichtung nach Anspruch 5, dadurch gekennzeichnet, daß die photoelektrische Einrichtung eine einzige photoelektrische Einheit (44) aufweist, worin die Datenverarbeitungseinheit den Abstand zwischen den erfassten Markierungen bereichnet, basierend auf der Anzahl der Hochfrequenzimpulse, die durch die Impulsfolgeerzeugungseinrichtung zwischen aufeinanderfolgende Erfassungsimpulssignale erzeugt werden.

7. Vorrichtung nach Anspruch 5, dadurch gekennzeichnet, daß die photoelektrische Einrichtung zwei im Abstand voneinander angeordnete photoelektrische Einheiten (45; 47) aufweist, worin der Abstand der photoelektrischen Einheiten ein vorgegebener Abstand ist; und worin die Datenverarbeitungseinrichtung die Differenz zwischen dem vorgegebenen Abstand zwischen den photoelektrischen Einheiten und den Abstand zwischen den erfassten Markierungen berechnet durch Zählung der Anzahl der Impulse in der kontinuierlichen Impulsfolge zwischen dem Erfassungsimpulseingang durch die verschiedenen photoelektrischen Einheiten, wobei ein Irrtum von einem vorbestimmten Konstruktionsabstand berechnet ist.

## Revendications

1. Appareil pour laminer un film de matière plastique (12) sur du papier (16) pour former un produit composite laminé, le film traversant l'appareil sous forme d'une bande continue s'étendant longitudinalement et étant déformable en extension de manière que la distance longitudinale entre deux points quelconques de référence sur la bande de film puisse varier en cours de laminage; l'appareil étant du type comportant des moyens de support pour porter divers composants de l'appareil; des moyens d'alimentation en papier (18) montés sur lesdits moyens de support pour fournir une alimentation continue du papier à laminer; des moyens d'alimentation en film (14) montés sur lesdits moyens de support pour fournir une alimentation continue en film à laminer; des moyens de laminage (26) montés sur lesdits moyens de support pour appliquer par compression ladite bande de film sur ledit papier pour former un produit composite laminé qui est continu avec ladite bande de film; et dans lequel; un premier jeu de rouleaux (32, 34) est monté sur lesdits moyens de support et est en prise avec la bande de film à un emplacement situé en aval des moyens d'alimentation en film (14); un second jeu de rouleaux (26, 28) est monté sur lesdits moyens de support et est en prise avec la bande de film à un emplacement situé en aval du premier jeu de rouleaux; des moyens de variation de vitesse des rouleaux sont prévus pour faire varier la vitesse du premier jeu de rouleaux par rapport à la vitesse du second jeu afin d'étirer ou relâcher de manière sélective la portion de la bande de film située entre eux; caractérisé par

(a) des moyens de contrôle de longueur du film (44; 45, 47) pour mesurer la longueur de portions prédéterminées de la bande de film en mouvement à un emplacement situé en aval du second jeu de rouleaux et pour fournir un signal de contrôle indiquant ladite longueur mesurée à des moyens informatiques; et

(b) des moyens informatiques (100) pour comparer la valeur de longueur mesurée du signal de contrôle avec une valeur de longueur prédéterminée et pour fournir en conséquence des signaux de commande aux moyens de variations de vitesse des rouleaux (71, 80) pour régler la vitesse du premier jeu de rouleaux par rapport à la vitesse du second jeu de rouleaux afin d'exercer sur la bande de film un étirage ou un relâchement ayant une amplitude déterminée.

2. Appareil selon la revendication 1, caractérisé en ce que lesdits moyens informatiques (100) comprennent des moyens à microprocesseur pour le traitement électronique des données.

3. Appareil selon la revendication 1, caractérisé en ce que lesdits moyens de laminage sont constitués par le second jeu de rouleaux (26, 28).

4. Appareil selon la revendication 1, caractérisé en ce que lesdits moyens de contrôle de longueur du film comprennent:

(a) un détecteur de marques (44; 45, 47) pour détecter le passage d'une marque (19) et délivrer aux moyens informatiques (100) une impulsion électronique de détection en réponse à cette détection, ce détecteur de marques étant disposé dans une position prédéterminée en aval des moyens de laminage; et

(b) un générateur de train d'impulsions (pulsateur rotatif 101) pour délivrer aux moyens informatiques (100) un train continu et à haute fréquence d'impulsions électroniques, la fréquence de ce train d'impulsions étant fonction de la vitesse du produit composite laminé dans les moyens de laminage.

5. Appareil selon la revendication 4, caractérisé en ce que le détecteur de marques comprend au moins un moyen photoélectrique (44; 45, 47) pour générer un signal par impulsion électrique en réponse au passage d'une marque (19) à travers un faisceau lumineux fixe issu de ce moyen photoélectrique.

6. Appareil selon la revendication 5, caractérisé en ce que ledit moyen photoélectrique comporte une seule unité photoélectrique (44), ladite unité informatique calculant la distance entre les marques détectées et sur la base du nombre des impulsions à haute fréquence générées par le générateur de trains d'impulsions entre des signaux pulsés de détection consécutifs.

7. Appareil selon la revendication 5, caractérisé en ce que ledit moyen photoélectrique comprend deux unités photoélectriques (45, 47) espacées l'une de l'autre, en ce que l'espacement entre ces unités photoélectriques est une distance prédéterminée, et en ce que lesdits moyens informatiques calculent la différence entre la distance prédéterminée séparant les unités photoélectriques et la distance séparant les marques détectées, en comptant le nombre d'impulsions du train continu d'impulsions entre les arrivées des impulsions de détection des différentes unités photoélectriques, pour calculer l'erreur par rapport à un espacement type prédéterminé.

FIG. I

FIG. 2

FIG. 3

FIG. 4

FIG. 5

5